# EUROPÄISCHE PATENTSCHRIFT

(11) **EP 0 662 741 B1**
(45) Veröffentlichungstag und Bekanntmachung des Hinweises auf die Patenterteilung: **23.12.1998**
(21) Anmeldenummer: 95100074.4
(22) Anmeldetag: 04.01.1995
(51) Int. Cl.: H02B 1/20, H05K 7/14, H01R 9/09, H01R 9/24

(54) **Niederspannungsschaltgerät**
Low voltage switchgear
Appareil de coupure à basse tension

(30) Priorität: 11.01.1994 DE 4400484
(43) Veröffentlichungstag der Anmeldung: 12.07.1995
(73) Patentinhaber: PILZ GmbH & CO., 73760 Ostfildern (DE)
(72) Erfinder: Bender, Werner, D-73760 Ostfildern (DE)
(74) Vertreter: Rüger, Rudolf, Dr.-Ing.

(56) Entgegenhaltungen:
- DE-A- 4 033 969
- DE-C- 2 511 385
- US-A- 4 251 853

## Beschreibung

Aus der DE 40 33 969 A1 sind Niederspannungsschaltgeräte bekannt, die ein zur Befestigung in Schaltkasten eingerichtetes Gehäuse aufweisen. In dem etwa quaderförmigen Gehäuse, dessen Inneraum von zwei zueinander parallele Anschlussseiten, zwei zueinander parallele Seitenflächen einer Rückseite und einer Frontplatte umschlossen ist, befindet sich eine Leiterplatte, auf der eine elektrische Schaltung aufgebaut ist. Die Leiterplatte liegt parallel zu der Frontplatte der Gehäuses. Zum Anschließen dieser elektrischen Schaltung an eine äußere Verdrahtung sind Schraubklemmen vorgesehen, die auf der Leiterplatte aufgelötet sind. Die Lötstifte dieser Schraubklemmen stehen senkrecht auf der Achse der Klemmenöffnung, in die der Anschlußdraht einzustecken ist.

Um die Schrauben der Schraubklemmen betätigen zu können, befinden sich in der Frontplatte Bohrungen, die mit den Schraubklemmen fluchten. Weitere Bohrungen sind in den Anschlussseiten vorhanden, um die äußere Verdrahtung in Klemmöffnungen der Schraubklemmen einführen zu können.

Diese Geometrie ist günstig, weil die Lötverbindungen zwischen der Leiterlatte und dem Lötstift nicht durch die Kraft belastet werden, die auftritt, wenn zur Betätigung der Klemmschraube ein Schraubwerkzeug in den Schraubenkopf gedrückt wird. Dafür muss in Kauf genommen werden, dass die Leiterplatte parallel zu der Frontplatte liegt, was die Anzahl der über Schraubklemmen anzuschließenden Drahtverbindungen stark einschränkt. Ferner muss hingenommen werden, dass sich die Leiterplatte auf Grund der Werkzeugkräfte durchbiegt.

Davon ausgehend ist es Aufgabe der Erfindung, ein Niederspannungsschaltgerät zu schaffen, bei dem die Werkzeugkräfte weder die Lötverbindung mit der Schraubklemme belasten noch die Leiterplatte durchbiegen können.

Diese Aufgabe wird durch ein Niederspannungsschaltgerät mit den Merkmalen des Anspruchs 1 gelöst.

Das Niederspannungsschaltgerät weist ein Gehäuse auf, an dem sich die im Abstand parallel zueinander angeordneten Anschlußseiten aneinander gegenüberliegen. Diese Anschlußseiten sind für eine äußere Verkabelung oder Verdrahtung zugänglich und zwar auch dann, wenn mehrere derartiger Schaltgeräte mit ihren Seitenflächen aneinanderliegend in einer Reihe montiert werden. Die Bedienfläche bleibt dabei in jedem Falle zugänglich, weil alle Kabel lediglich an den Anschlußseiten anzuschließen sind und somit kein Kabel die Bedienfläche verdeckt. Das Anschließen oder Verdrahten des Niederspannungsschaltgerätes erfolgt mit Hilfe der in dem Innenraum vorgesehenen Schraubklemmen. Diese sind mit einem Schraubendreher leicht zu betätigen und erfordern keine Spezialwerkzeuge.

Die in den Schraubklemmen vorgesehenen Klemmschrauben sind sämtlich durch in der Bedienfläche liegenden Öffnungen zugänglich, so daß diese auch bei sehr vielen anzuschließenden Drähten leicht betätigt werden können. Die anzuschließenden Drähte werden dabei durch die in dem Gehäuse vorgesehenen Anschlußöffnungen in die Klemmöffnungen der Schraubklemmen eingesteckt, wonach die Klemmschraube entsprechend fest angezogen wird. Dabei sind alle Anschlußöffnungen in den Anschlußseiten, d.h. außerhalb der Bedienfläche vorgesehen. Die in dem Gehäuse angeordneten Schraubklemmen sind mit wenigstens einer Leiterplatte verlötet, die die eine bestimmte Funktion ausführende elektrische Schaltung trägt. Weil dabei die Lötstifte der Schraubklemmen zu den Anschlußöffnungen parallel ausgerichtet sind, liegen die Klemmöffnungen parallel zu der Leiterplatte, wenn die Lötstifte durch entsprechende Leiterplattenbohrungen gesteckt und mit diese umgebenden Lötaugen verlötet sind. Diese Art der Befestigung der Lötstifte an der Leiterplatte ist nicht nur einfach sondern stellt darüberhinaus sicher, daß von den Schraubklemmen eventuell ausgehende mechanische Kräfte von der Leiterplattenbohrung aufgenommen und somit von der Leiterbahn ferngehalten werden, so daß diese kaum beschädigt werden kann. Außerdem aber ermöglicht diese Anordnung der Schraubklemmen auf der Leiterplatte, daß die Leiterplatte flächenparallel zu der Anschlußseite angeordnet wird, während der anzuschließende Draht durch die in derselben Anschlußseite vorgesehene Anschlußöffnung gesteckt und somit rechtwinklig zu der Leiterplatte stehend befestigt wird. Die so ermöglichte Anordnung der Leiterplatten in dem Innenraum ergibt eine gute Raumausnutzung und schafft einen übersichtlichen Innenaufbau des Niederspannungsschaltgerätes. Darüberhinaus sind die Schraubklemmen mit einem einfachen Lötvorgang an der Leiterplatte zu befestigen, was umständlichere Verdrahtungsarbeiten erspart.

Es ist ein elektrisch isolierender Formkörper vorgesehen, der mehrere voneinander elektrisch isolierter Schraubklemmen aufnimmt und hält. Die in einer Reihe liegenden Schraubklemmen sind dabei zueinander parallel angeordnet, so daß deren Klemmöffnungen und Klemmschrauben jeweils in die gleiche Richtung weisen.

Um auf den Leiterplatten auch schwere Bauelemente befestigen zu können oder das Niederspannungsschaltgerät gegen Stoß und Vibrationen zu schützen, ist es vorteilhaft, wenn die Leiterplatte in dem Gehäuse durch eine Halteeinrichtung ortsfest gehalten ist. Diese Halteeinrichtung kann beispielsweise aus Stegen gebildet sein, die in dem Innenraum an den Seitenflächen angeordnet sind und zwischen die die Leiterplatte einschiebbar ist.

Auf der Leiterplatte können mehrere Schraubklemmen in einer Reihe nebeneinander angeordnet sein, so daß ganze Klemmenleisten ausgebildet werden.

Dabei ist die Bestückung der Leiterplatte erleichtert, wenn mehrere Schraubklemmen zu einer Schraubklemmeneinheit zusammengefaßt sind.

Um die Leiterplatte und deren Schaltung gegen mechanische Beschädigung auch bei kräftigem Anziehen der Klemmschrauben zu schützen, kann der Formkörper mit Einrichtungen zur ortsfesten Befestigung in dem Gehäuse versehen sein. Dabei genügt es, wenn diese Einrichtungen Nuten sind, in die entsprechende an dem Gehäuse vorgesehene Stege eingreifen. Diese Nuten können parallel zu der Leiterplatte angeordnet sein, was die Möglichkeit eröffnet, das Gehäuse derart zweiteilig auszuführen, daß es einen Bodenteil, der die Leiterplatten aufnimmt und einen Kappenteil aufweist, der im wesentlichen die Schraubklemmen aufnimmt. Die zwischen dem Bodenteil und dem Kappenteil ausgebildete Trennfuge trennt dabei die Seitenteile und die Anschlußseiten.

Obwohl die in dem Innenraum angeordneten und mit der Leiterplatte verlöteten Schraubklemmen auch höhenversetzt angeordnet werden können, ist es vorteilhaft, wenn sie auf einer geraden, zu der Anschlußseite und zu der Bedienseite parallelen Linie angeordnet sind. Entsprechend liegen auch die zur Betätigung der Klemmschrauben dienenden Öffnungen und die den Klemmöffnungen zugeordneten Anschlußöffnungen jeweils auf einer Linie.

Zur Erhöhung der Anzahl der in dem Gehäuse unterzubringenden Schraubklemmen und damit der nach außen herstellbaren elektrischen Verbindungen kann das Gehäuse zwischen der Bedienseite und der Anschlußseite terassenförmig abgestuft sein, so daß im Anschluß an die Bedienseite wenigstens eine Treppenstufe ausgebildet ist. In diesem Fall sind in dem Innenraum des Gehäuses auf zwei Leiterplatten zwei Reihen von Schraubklemmen anordenbar, die gegeneinander in ihrer Höhe versetzt sind. Die weiter innen, d.h. zur Gehäusemitte hin liegenden Schraubklemmen sind dabei soweit höher angeordnet, daß deren Klemmöffnungen oberhalb der Klemmschrauben der außen liegenden Schraubklemmen angeordnet sind. Somit können beide Reihen von Schraubklemmen leicht angeschlossen werden.

Zur weiteren Erhöhung der Anzahl von durch Schraubklemmen gebildeten Klemmstellen kann das Gehäuse auch mehrfach treppenartig abgestuft sein.

In der Zeichnung ist ein Ausführungsbeispiel der Erfindung dargestellt. Es zeigen:
- Fig. 1: ein Niederspannungsschaltgerät in perspektivischer Darstellung,
- Fig. 2: das Niederspannungsschaltgerät nach Fig. 1 in Explosionsdarstellung,
- Fig. 3: das Gehäuse des Niederspannungsschaltgerätes nach Fig. 1 in Explosionsdarstellung,
- Fig. 4: eine mit einer Schraubklemmenleiste bestückte Leiterplatte für das Niederspannungsschaltgerät nach Fig. 1 in perspektivischer Darstellung und
- Fig. 5: die Schraubklemmenleiste nach Fig. 4.

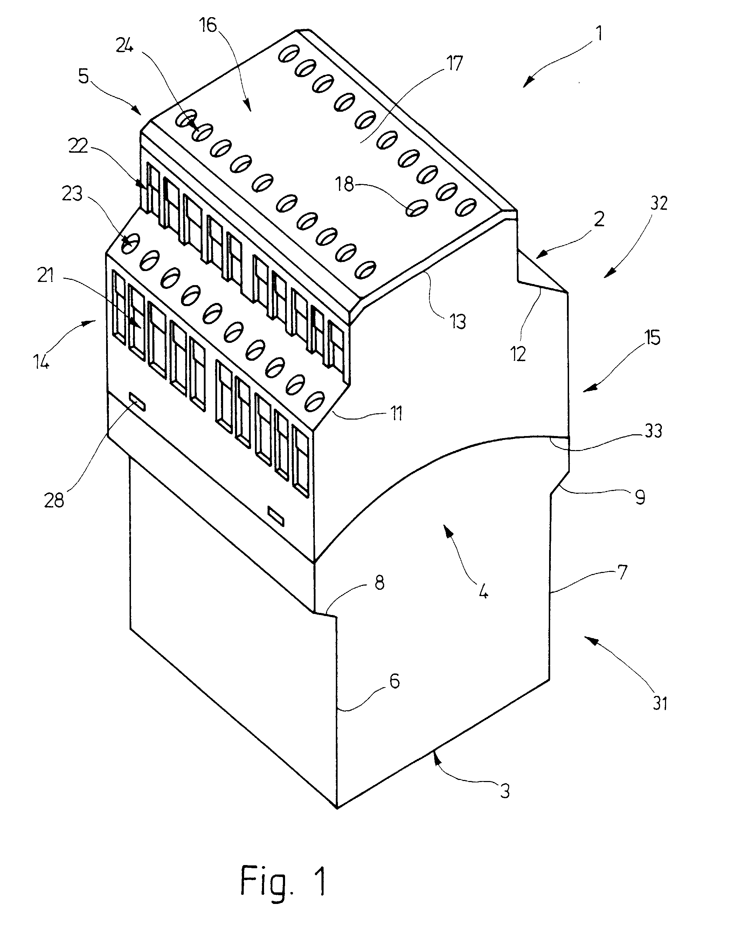

In Fig. 1 ist ein Niederspannungsschaltgerät 1 dargestellt, das ein aus einem schlagzähen Plastikwerkstoff bestehendes, elektrisch gut isolierendes Gehäuse 2 aufweist. Das Gehäuse 2 ist ungefähr quaderförmig und weist eine rechteckige Rückseite 3 auf, an der nicht weiter dargestellte Mittel zum Befestigen an einer Montageschiene vorgesehen sind. Im rechten Winkel zu der Rückseite 3 schließen sich an diese zwei plan ausgebildeten Seitenflächen 4, 5 an, die im Abstand parallel zueinander angeordnet sind und die den gleichen Umriß aufweisen.

Der Umriß der Seitenflächen 4, 5 wird ausgehend von der Rückseite 3 durch zwei zueinander parallel verlaufende gleichlange Kanten 6, 7 bestimmt, die mit kurzen Abschnitten 8, 9 nach außen abknicken, um dann mit vergrößertem Abstand wiederum parallel zueinander zu verlaufen. Daran anschließend gehen die Kanten 6, 7 mit kurzen schräg zu de Rückseite 3 verlaufenden Stücken 11, 12 in weitere Abschnitte über, die in einem Abstand, der geringer ist als die Breite der Rückseite 3, parallel zueinander bis zu einer Abschlußkante 13 verlaufen, die parallel zu der Rückseite 3 liegt.

Die beiden Seitenflächen 4, 5 sind durch Anschlußseiten 14, 15 miteinander verbunden, die abschnittsweise plan ausgebildet sind und dem Umriß der Seitenflächen 4, 5 folgen.

Die Seitenflächen 4, 5 und die Anschlußseiten 14, 15 begrenzen eine Öffnung, die mit einem flach ausgebildeten im Umriß rechteckigen Deckel 16 verschlossen ist. Weil der Deckel 16 bei vollständig angeschlossenem Niederspannungsschaltgerät 1 die einzige verbleibende, im wesentlichen frei zugängliche Fläche ist, stellt er zugleich eine Bedienfläche 17 dar, an der Bedienelemente und/oder Anzeigeelemente angeordnet sein können. In Fig. 1 ist zu diesem Zweck lediglich eine Öffnung 18 vorgesehen, in der beispielsweise eine Leuchtdiode angeordnet sein kann.

Der Deckel 16 ist mit einer Snap-in-Verbindung an dem übrigen Gehäuse 2 befestigt, die ihn derartig festhält, daß er sich nicht unbeabsichtigt lösen kann.

In den Anschlußseiten 14, 15 sind in einem terassenartig ausgebildeten Abschnitt Anschlußöffnungen 21, 22 vorgesehen, durch die die Drähte einer nicht weiter dargestellten äußeren Verdrahtung in das Gehäuse 2 einsteckbar sind. Die Anschlußöffnungen 21, 22 liegen dabei jeweils auf einer geraden Linie, die parallel sowohl zu der Rückseite 3 als auch zu der Bedienfläche 17 angeordnet sind.

Jeder Reihe von Anschlußöffnungen 21, 22 ist eine Reihe von Öffnungen 23, 24 zugeordnet, die rechtwinklig zu den Anschlußöffnungen 21, 22 stehen. Auch die Öffnungen 23, 24 liegen auf geraden Linien, die jeweils parallel zu den Anschlußseiten 14, 15 sind.

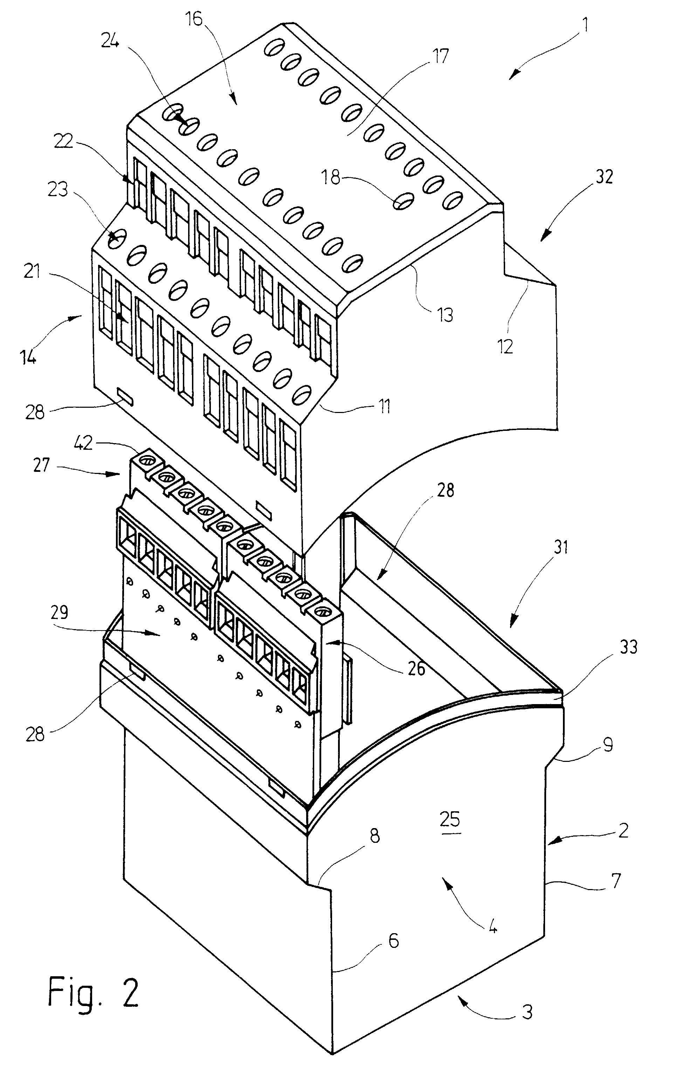

Den Anschlußöffnungen 21, 22 und Öffnungen 23, 24 sind, wie sich insbesondere aus Fig. 2 ergibt, Schraubklemmenleisten 26, 27 zugeordnet, die in einem von dem Gehäuse 2 umschlossenen Innenraum 28 angeordnet sind. Die Schraubklemmenleisten 26, 27 sind mit einer Leiterplatte 29 verlötet, die in einen Bodenteil 31 des Gehäuses 2 eingesteckt ist.

Das Gehäuse 2 zerfällt dabei in den Bodenteil 31 und einen Kappenteil 32, in dem sämtliche Anschlußöffnungen 21, 22 sowie die Öffnungen 23, 24 vorgesehen sind. Das Gehäuse 2 ist scmit an einer Trennfuge 33 zweigeteilt, in der zur Verbindung des Bodenteils 31 mit dem Kappenteil 32 eine Schnappverbindungseinrichtung 34 vorgesehen ist.

In dem in Fig. 2 geöffnet dargestellten Gehäuse 2 sind insgesamt vier mit Schraubklemmenleisten bestückte Leiterplatten angeordnet, von denen zur Verbesserung der Übersichtlichkeit jedoch lediglich die Leiterplatte 29 dargestellt ist. Die von dem Bodenteil 31 aufgenommenen, Schraubklemmenleisten tragenden Leiterplatten sind sämtlich flächenparallel zu den Anschlußseiten 14, 15 ausgerichtet. Dabei sind die außenliegenden Leiterplatten 29 in ihrer Länge so bemessen, daß die Schraubklemmenleisten 26, 27 durch die Anschlußöffnungen 21 und Öffnungen 23 zugänglich sind. Die nicht dargestellten innenliegenden Leiterplatten sind entsprechend länger und so angeordnet, daß die auf ihnen aufgelöteten Schraubklemmenleisten durch die Anschlußöffnungen 22 und die Öffnungen 24 zugänglich sind. Entsprechend sind die der in den Figuren nicht sichtbaren Anschlußseite 15 zugeordneten Leiterplatten ausgerichtet.

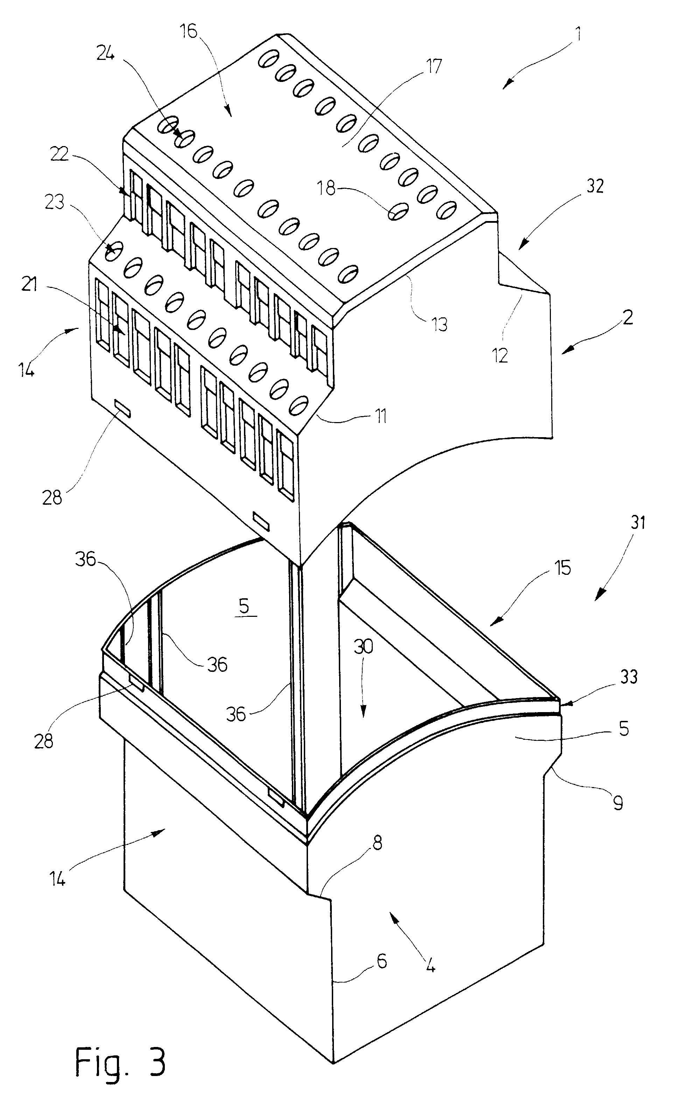

Das in Fig. 3 separat dargestellte Gehäuse 2 ist an seinen dem Innenraum 28 zugekehrten Seiten der Seitenflächen 4, 5 mit Stegen 36 versehen, die im Abstand von 1,5 bis 2 mm zueinander parallel zu den Anschlußseiten 14, 15 verlaufen. Die sich entlang der Seitenflächen 4, 5 erstreckenden Stege 36 dienen der Führung und Halterung der in Fig. 2 dargestellten Leiterplatte 29 und der anderen nicht dargestellten Leiterplatten. Die Stege 36 verlaufen dabei bis in den Bereich des Kappenteiles 32.

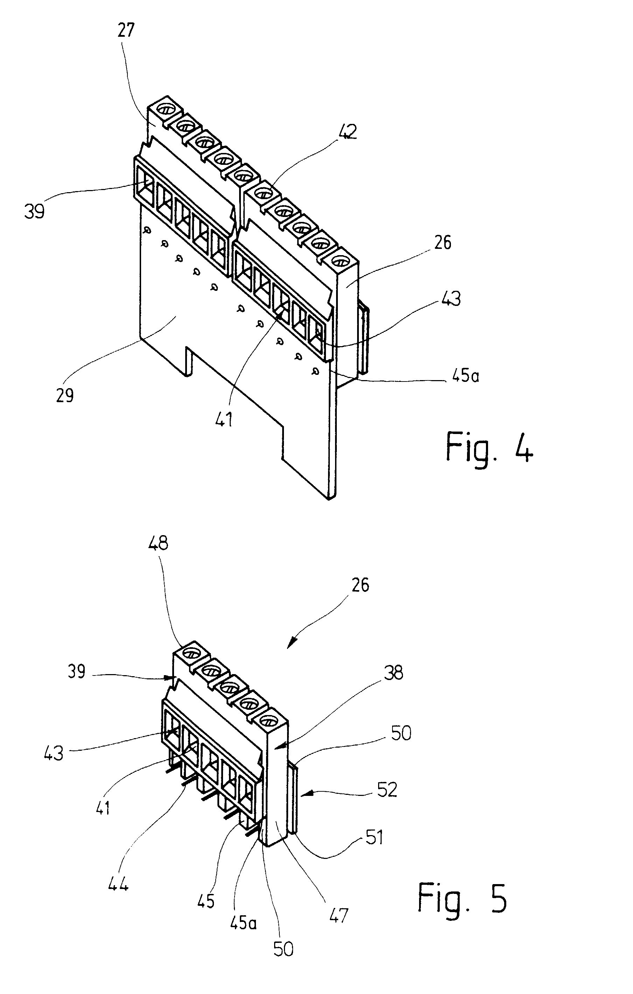

Beispielhaft für alle mit Schraubklemmenleisten versehenen Leiterplatten ist in Fig. 4 die Leiterplatte 29 separat dargestellt. Auf die Leiterplatte 29 sind die Schraubklemmenleisten 26, 27 aufgesetzt. Die Schraubklemmenleisten 26, 27 sind untereinander gleich ausgebildet, so daß im folgenden lediglich auf die Schraubklemmenleiste 26 Bezug genommen wird.

Die Schraubklemmenleiste 26 (Fig. 5) weist einen aus einem schlagzähen elektrisch isolierenden Plastikwerkstoff hergestellten Formkörper 38 auf, in dem elektrisch von einander isoliert fünf Schraubklemmen 39 aufgenommen sind. Bei entsprechendem Bedarf können die Formkörper 38 auch ohne weiteres mit sechs oder mehr Schraubklemmen 39 ausgebildet werden, wobei in dem Kappenteil 32 entsprechend mehr Anschlußöffnungen 21, 22 auszubilden sind.

Jede Schraubklemme 39 weist einen formschlüssig in dem Formkörper 38 gehaltenen Metallkörper 41 (Fig 5) auf, der eine über eine Klemmschraube 42 zu verengende Klemmöffnung 43 aufweist.

Jeder Klemmöffnung 43 ist eine entsprechende rechteckige Öffnung in dem Formkörper 38 zugeordnet, die sich nach innen, auf die Klemmöffnung 43 zu trichterartig verengt. Die Größe der rechteckigen Öffnungen in dem Formkörper 38 stimmt dabei mit den in dem Kappenteil 32 vorgesehenen Anschlußöffnungen 21, 22 überein. Diese sind relativ groß gehalten; jedenfalls merklich größer als die Klemmöffnungen 43 in dem Metallkörper 41. Somit ist das Einfädeln von Drähten in die Klemmöffnungen 43 erleichtert, denn ausgehend von den relativ großen Anschlußöffnungen 21, 22 wird ein in diese eingesteckter Draht infolge der trichterartigen Verengung problemlos in die Klemmöffnung 43 eingeführt.

Jede in dem Formkörper 38 gehaltene Schraubklemme 39 weist jeweils einen Lötstift 44 auf, der sich parallel zu der jeweiligen in dem Metallkörper 41 vorgesehenen Klemmöffnung 43 erstreckt. Der Lötstift 44 ist dabei durch einen im Querschnitt rechteckigen und aufgrund seiner Materialwahl biegesteifen Blechstreifen gebildet. Der Querschnitt, der insbesondere aus der Fig. 5 ersichtlichen Lötstifte 44, ist dabei so bemessen, daß ein solcher Lötstift problemlos durch eine wenigstens 1,5 mm Durchmesser messende Leiterplattenbohrung hindurchpaßt. Die mit in Fig. 4 nicht weiter dargestellten Lötaugen und sich daran anschließenden Leiterbahnen verbundenen Lötstifte 44 stellen zum einen die elektrischen Verbindung zu der jeweiligen Schraubklemme 39 dar und halten zum anderen die Schraubklemmenleiste 26 fest an der Leiterplatte 29. Diese liegt flächenhaft an einer durch die Lötstifte 44 unterbrochenen Anlagefläche 45 an, die an dem Formkörper 38 unterhalb der Klemmöffnungen 43 ausgebildet ist. Die Anlagefläche 45 liegt dabei in einer Vertiefung, so daß sie gegen die Mündung der Klemmöffnungen 43 parallel zurückversetzt ist und ein Vorsprung 45a entsteht. Dadurch liegen die Mündungen der Klemmöffnungen 43 satt an den Innenseiten der Anschlußöffnungen 21, 22 an, während die Leiterplatte 29 noch in einem gewissen Abstand zu der Anschlußseite 14 steht.

Zu beiden, rechtwinklig zu der Leiterplatte 29 stehenden Seiten 47, 48 des Formkörpers 38 sind insgesamt vier Haltenuten 49, 50, 51 vorgesehen, deren vierte in den Fig. 4 und 5 verdeckt und somit unsichtbar ist. Die Haltenuten 49, 50, 51 liegen dabei parallel zu der mit der Schraubklemmenleiste 26 zu verbindenden Leiterplatte 29 und weisen einen Querschnitt von ungefähr einem Quadratmillimeter auf. Dabei erstrecken sich die Haltenuten 49, 50 in direkter Verlängerung der Anlagefläche 45 entlang der Seiten 47, 48 durch den die Klemmöffnungen begrenzenden Vorsprung des Formkörpers 38. Zur Ausbildung der Haltenut 51 und der in Fig. 5 verdeckten Haltenut weist der Formkörper 38 an seiner Rückseite Anformungen 52 auf, die mit dem Formkörper 38 einstückig verbunden sind.

Den Haltenuten 49, 50, 51 sind in dem Kappenteil 32 vorgesehene, in den Fig. nicht dargestellte Stege zugeordnet, die in die Haltenuten 49, 50, 51 eingreifen, wenn der Formkörper 38 in seine vorgesehene Stellung geschoben ist, in der sich die Klemmöffnungen 43 mit den Anschlußöffnungen 21, 22 decken und in der die Klemmschrauben 42 unter den Öffnungen 23, 24 stehen.

Aufgrund der Parallelität der Haltenut 49, 50, 51 zu der Leiterplatte 29 läßt sich das mit Leiterplatten bestückte Gehäuse 2 in einer einzigen Linearbewegung zusammenfügen, wobei sowohl die Leiterplatten als auch die Schraubklemmenleisten 26, 27 arretiert werden.

## Patentansprüche

1. Niederspannungsschaltgerät (1)
mit einem einen Innenraum (28) umschließenden, zweigeteilten, im wesentlichen quaderförmigen Gehäuse (2), das eine zur Befestigung an einer Schiene eingerichtete Rückseite (3), zwei im Abstand parallel zueinander liegenden Seitenflächen (4, 5), zwei im Abstand parallel zueinander liegende Anschlußseiten (14, 15), die zu den Seitenflächen (4, 5) rechtwinklig stehen sowie eine Bedienseite (17) aufweist,
mit wenigstens einer in dem Innenraum (28) im wesentlichen parallel zu der Anschlußseite (14) angeordneten Leiterplatte (29), die in dem Gehäuse (2) durch eine Halteeinrichtung (36) ortsfest gehalten ist,
mit einem elektrisch isolierenden Formkörper (38), der einen an der Leiterplatte (29) stirnseitig anliegenden Vorsprung (45a) und eine an der Leiterplatte anliegende Anlagefläche (45) aufweist, die gegen den Vorsprung zurückversetzt ist,
mit in dem Formkörper (38) angeordneten Schraubklemmen (39), die jeweils eine Klemmöffnung (43), eine rechtwinklig zu dieser stehende Klemmschraube (42) sowie wenigstens einen parallel zu der Klemmöffnung (43) angeordneten Lötstift (44) aufweisen, wobei wenigstens einige Lötstifte (44) mit der Leiterplatte verlötet sind,
mit in den Anschlußseiten (14, 15) vorgesehenen Anschlußöffnungen (21, 22), durch die die Klemmöffnungen (43) der Schraubklemmen (39) von außen zugänglich sind und
mit in der Bedienseite (17) vorgesehenen Öffnungen (23, 24), durch die die Klemmschrauben (42) der Schraubklemmen (39) betätigbar sind.

2. Niederspannungsschaltgerät nach Anspruch 1, wobei die Halteeinrichtungen (36) in dem Innenraum (28) an den Seitenflächen (4, 5) angeordnete Stege (36) sind, zwischen die die Leiterplatte (29) einschiebbar ist.

3. Niederspannungsschaltgerät nach Anspruch 1, wobei auf der Leiterplatte (29) mehrere Schraubklemmen (39) in einer Reihe nebeneinander angeordnet sind.

4. Niederspannungsschaltgerät nach Anspruch 1, wobei mehrere Schraubklemmen (39) zu einer Schraubklemmeneinheit (26) zusammengefaßt sind.

5. Niederspannungsschaltgerät nach Anspruch 1, wobei der Formkörper (38) Einrichtungen (49, 50, 51) zur ortsfesten Befestigung in dem Gehäuse (2) aufweist und daß das Gehäuse (2) Mittel zur ortsfesten Halterung der Formkörper (38) aufweist.

6. Niederspannungsschaltgerät nach Anspruch 5, wobei die Einrichtungen zur Befestigung der Formkörper (38) in dem Gehäuse (2) Nuten (49, 50, 51) sind.

7. Niederspannungsschaltgerät nach Anspruch 6, wobei die Nuten (49, 50, 51) parallel zu der Leiterplatte (29) angeordnet sind.

8. Niederspannungsschaltgerät nach Anspruch 6, wobei die Nuten (49, 50, 51) an dem Formkörper (38) seitlich angeordnet sind und in zu der Leiterplatte (29) parallelen Ebenen liegen.

9. Niederspannungsschaltgerät nach Anspruch 5, wobei die Mittel zur ortsfesten Halterung der Formkörper (38) in einem von dem Gehäuse (2) gebildeten Kappenteil (32) angeordnete Stege sind.

10. Niederspannungsschaltgerät nach Anspruch 9, wobei die Stege einstückig mit dem Kappenteil (32) ausgebildet sind.

11. Niederspannungsschaltgerät nach Anspruch 1, wobei das Gehäuse (2) Mittel zur ortsfesten Halterung der Leiterplatte (29) aufweist.

12. Niederspannungsschaltgerät nach Anspruch 11, wobei die Mittel dem Gehäuse (2) ausgebildete, den Leiterplatten zugeordnete Stege oder Leisten (36) sind, die an den Seitenwänden (4, 5) parallel zu den Anschlußseiten (14, 15) ausgebildet sind.

13. Niederspannungsschaltgerät nach Anspruch 1, wobei das Gehäuse (2) zwischen der Bedienseite (17) und der Anschlußseite (14) treppenartig abgestuft ist, so daß im Anschluß an die Bedienseite (17) wenigstens eine Treppenstufe ausgebildet ist.

14. Niederspannungsschaltgerät nach Anspruch 1, wobei das Gehäuse einen Kappenteil (32) und einen Bodenteil (31) aufweist, wobei alle Anschlußöffnungen (21, 22) und Öffnungen (23, 24) in dem Kappenteil vorgesehen sind.

## Claims

1. Low-voltage switchgear (1)
with an essentially parallelepipedal casing (2), which is divided into two, encloses an inner area (28) and which has a rear side (3) fitted for fastening to a rail, two side faces (4, 5) spaced parallel to one another, two connection sides (14, 15) spaced parallel to one another and scanding at right angles to the side faces (4, 5), and also has a control side (17);
with at least one printed circuit board (29), which is arranged essentially parallel to the connection side (14) in the inner area (28) and is held fixed in the casing (2) by a holding means (36);
with an electrically insulating moulded body (38), which has a projection (45a) abutting against the printed circuit board (29) on the face side and an abutment surface (45) abutting against the printed circuit board and set back in relation to the projection;
with screw terminals (39) arranged in the moulded body (38) which respectively have a terminal opening (43), a terminal screw (42) standing at right angles hereto and also at least one terminal pin (44) arranged parallel to the terminal opening (43), whereby at least some terminal pins (44) are soldered to the printed circuit board;
with connection openings (21, 22), which are provided in the connection sides (14, 15) and through which the terminal openings (43) of the screw terminals (39) are accessible from the outside, and
with openings provided in the control side (17) through which the terminal screws (42) of the screw terminals (39) may be operated.

2. Low-voltage switchgear according to Claim 1, wherein the holding means (36) are webs (36), which are arranged in the inner area (28) on the side faces (4, 5) and between which the printed circuit board (29) may be inserted.

3. Low-voltage switchgear according to Claim 1, wherein several screw terminals (39) are arranged in a row next to one another on the printed circuit board (29).

4. Low-voltage switchgear according to Claim 1, wherein several screw terminals (39) are combined to form a screw terminal unit (26).

5. Low-voltage switchgear according to Claim 1, wherein the moulded body (38) has means (49, 50, 51) for fixed fastening in the casing (2), and that the casing (2) has means for fixed fastening of the moulded body (38).

6. Low-voltage switchgear according to Claim 5, wherein the means for fastening the moulded body (38) in the casing (2) are grooves (49, 50, 51).

7. Low-voltage switchgear according to Claim 6, wherein the grooves (49, 50, 51) are arranged parallel to the printed circuit board (29).

8. Low-voltage switchgear according to Claim 6, wherein the grooves (49, 50, 51) are arranged laterally on the moulded body (38) and lie in planes parallel to the printed circuit board (29).

9. Low-voltage switchgear according to Claim 5, wherein the means for fixed mounting of the moulded body (38) are webs arranged in a cap portion (32) formed by the casing (2).

10. Low-voltage switchgear according to Claim 9, wherein the webs are constructed in one piece with the cap portion (32).

11. Low-voltage switchgear according to Claim 1, wherein the casing (2) has means for fixed fastening of the printed circuit board (29).

12. Low-voltage switchgear according to Claim 11, wherein the means are webs or strips (36), which are constructed on the casing (2) and allocated to the printed circuit boards, and are constructed on the side walls (4, 5) parallel to the connection sides (14, 15).

13. Low-voltage switchgear according to Claim 1, wherein the casing (2) is stepped in a stairs-like arrangement between the control side (17) and the connection side (14) so that at least one stair step is formed adjoining the control side (17).

14. Low-voltage switchgear according to Claim 1, wherein the casing has a cap portion (32) and a base portion (31), all the connection openings (21, 22) and openings (23, 24) being provided in the cap portion.

## Revendications

1. Appareil de commutation basse tension (1) comprenant :
- un boîtier (2) essentiellement parallélépipédique, divisé en deux, entourant un espace intérieur (28) et présentant un côté arrière (3) agencé en vue de la fixation sur un rail, deux faces latérales (4, 5) situées parallèlement à distance l'une de l'autre, deux côtés de raccordement (14, 15) situés parallèlement à distance l'un de l'autre et orientés perpendiculairement aux faces latérales (4, 5), ainsi qu'un côté utilisateur (17),
- au moins une carte à circuit (29) disposée dans l'espace intérieur (28) de façon essentiellement parallèle au côté de raccordement (14) et maintenue de façon fixe dans le boîtier (2) par un dispositif de maintien (36),
- un corps moulé (38) électriquement isolant présentant une saillie (45a) appliqué frontalement contre la carte à circuit (29) et une surface d'appui (45) qui est appliquée contre la carte à circuit et qui se trouve en retrait par rapport à la saillie,
- des bornes à vis (39) disposées dans le corps moulé (39) et présentant chacune une ouverture de serrage (43), une vis de serrage (42) disposée perpendiculairement à ladite ouverture, ainsi qu'au moins une broche à souder (44) disposée parallèlement à l'ouverture de serrage (43), au moins quelques broches à souder (44) étant soudées à la carte à circuit,
- des ouvertures de raccordement (21, 22) qui sont prévues sur les côtés de raccordement (14, 15) et à travers lesquelles les ouvertures de serrage (43) des bornes à vis (39) sont accessibles de l'extérieur, et
- des ouvertures (23, 24) qui sont prévues dans le côté utilisateur (17) et à travers lesquelles les vis de serrage (42) des bornes à vis (39) peuvent être actionnées.

2. Appareil de commutation basse tension suivant la revendication 1, les dispositifs de maintien (36) dans l'espace intérieur (28) étant constitués par des nervures (36) qui sont disposées sur les faces latérales (4, 5) et entre lesquelles la carte à circuit (29) peut être insérée.

3. Appareil de commutation basse tension suivant la revendication 1, plusieurs bornes à vis (39) étant disposées côte à côte en une rangée sur la carte à circuit (29).

4. Appareil de commutation basse tension suivant la revendication 1, caractérisé par le fait que plusieurs bornes à vis (39) sont réunies en un ensemble de bornes à vis (26).

5. Appareil de commutation basse tension suivant la revendication 1, le corps moulé (38) présentant des dispositifs (49, 50, 51) pour la fixation dans le boîtier (2) et le boîtier (2) présentant des moyens pour le maintien fixe des corps moulés (38).

6. Appareil de commutation basse tension suivant la revendication 5, les dispositifs pour la fixation des corps moulés (38) dans le boîtier (2) étant constitués par des rainures (49, 50, 51).

7. Appareil de commutation basse tension suivant la revendication 6, les rainures (49, 50, 51) étant disposées parallèlement à la carte à circuit (29).

8. Appareil de commutation basse tension suivant la revendication 6, les rainures (49, 50, 51) étant disposées latéralement sur le corps moulé (38) et situées dans des plans parallèles à la carte à circuit (29).

9. Appareil de commutation basse tension suivant la revendication 5, les moyens pour le maintien fixe des corps moulés (38) étant constitués par des nervures disposées dans une partie capot (32) formée par le boîtier (2).

10. Appareil de commutation basse tension suivant la revendication 9, les nervures étant réalisées d'une seule pièce avec la partie capot (32).

11. Appareil de commutation basse tension suivant la revendication 1, le boîtier (2) présentant des moyens pour le maintien fixe de la carte à circuit (29).

12. Appareil de commutation basse tension suivant la revendication 11, les moyens sur le boîtier (2) étant constitués par des nervures (36) qui sont associées aux cartes à circuit et sont formés sur les parois latérales (4, 5) parallèlement aux côtés de raccordement (14, 15).

13. Appareil de commutation basse tension suivant la revendication 1, le boîtier étant étagé en forme d'escalier entre le côté utilisateur (17) et le côté de raccordement (14), de manière qu'au moins une marche d'escalier soit formée à la suite du côté utilisateur (17).

14. Appareil de commutation basse tension suivant la revendication 1, le boîtier présentant une partie capot (32) et une partie fond (31), toutes les ouvertures de raccordement (21, 22) et ouvertures (23, 24) étant prévues dans la partie capot.
